**Europäisches Patentamt**

**European Patent Office**

**Office européen des brevets**

(19)

(11) Veröffentlichungsnummer: **0 036 655**
**B1**

(12) **EUROPÄISCHE PATENTSCHRIFT**

(45) Veröffentlichungstag der Patentschrift :
**13.06.84**

(21) Anmeldenummer : **81102150.0**

(22) Anmeldetag : **22.03.81**

(51) Int. Cl.³ : **B 32 B 27/10**, B 65 D 81/20,
B 65 D 33/20, B 32 B 7/06,
B 65 D 65/40

(54) **Verpackung für Lebensmittel und dergleichen.**

(30) Priorität : **21.03.80 DE 8007751 U**

(43) Veröffentlichungstag der Anmeldung :
**30.09.81 Patentblatt 81/39**

(45) Bekanntmachung des Hinweises auf die Patenterteilung : **13.06.84 Patentblatt 84/24**

(84) Benannte Vertragsstaaten :
**AT BE CH DE FR LI NL.**

(56) Entgegenhaltungen :
DE-A- 1 704 900
FR-A- 1 408 628
GB-A- 556 586
GB-A- 916 266
GB-A- 1 088 005
US-A- 3 228 168
US-A- 4 064 302

(73) Patentinhaber : **Scheuch Folien- u. Papierverarbeitung GmbH & Co. KG**
**Rheinstrasse 48**
**D-6109 Mühltal 1 (DE)**

(72) Erfinder : **Der Erfinder hat auf seine Nennung
verzichtet**

(74) Vertreter : **Felgel-Farnholz, Richard, Dr.-Ing.**
**Heidelberger Landstrasse 1**
**D-6100 Darmstadt-Eberstadt (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 036 655 B1

**Beschreibung**

Die Erfindung bezieht sich auf eine Vakuumpackung für Lebensmittel, insbesondere für Kaffee, die durch Versiegeln einer eine gasdichte Trägerfolie aufweisende Mehrshichtfolie hergestellt ist.

Es sind bereits zahlreiche Arten der Verpackung von Lebensmitteln, insbesondere Kaffee, bekannt. In vielen Fällen, insbesondere bei der Verpackung von Kaffee, werden hohe Anforderungen an die Dichtheit der Verpackung gestellt, um eine Verschlechterung des Aromas und der Qualität zu verhindern.

Hierbei werden sogenannte Vakuumpackungen bevorzugt. Dies bedeutet, daß man bei der Herstellung von Vakuumpackungen eine Naht eines gefüllten Beutels im Vakuum mittels Heißversiegelung verschließt. Im Markt gebräuchliche Verbunde und Packungen sind z. B. evakuierte Kaffee-Verpackungen des Aufbaus Polyester/Aluminium/Polyäthylen oder Polyester/Polyäthylen, die aber auch für Erdnuß-Verpackungen etc. benutzt werden. Die Vakuumpackung wird prinzipiell angewendet, um Wechselwirkung bei den abzupackenden Gütern und den Sauerstoff oder Wasserdampf in der Luft auszuschließen.

Der Kaffee wird maschinell verpackt und es besteht der Wunsch, die Zahl der von einer Maschine hergestellten Verpackungen pro Minute zu erhöhen. Mit den bisher für die Verpackung zur Verfügung stehenden Materialien läßt sich jedoch die Verpackungsgeschwindigkeit nicht wesentlich über 125 Packungen pro Minute steigern, wenn nicht der Aufwand unverhältnismäßig zunehmen würde.

Durch die US-A-3 228 168 ist es bekannt, für die luftdichte Verpackung von Lebensmitteln einen supergekühlten PVdC-Film in Form eines Stretch-Films zu verwenden, auf dem sich ein drucksensitiver Kleber befindet, der bei Anwendung von Druck an anderen Materialien klebt.

Die Erfindung betrifft eine andere für die Massenproduktion geeignete Verpackung und hat sich zur Aufgabe gestellt, eine neuartige Verpackung anzugeben, welche sowohl eine gasdichte Verpackung der Lebensmittel, insbesondere des Kaffees, gewährleistet, als auch durch die Art der verwendeten Materialien eine Steigerung der Abpackleistung, also eine höhere Zahl von pro Minute hergestellten Verpackungen ermöglicht.

Diese Aufgabe wird bei einer Verpackung der eingangs genannten Art dadurch gelöst, daß im Bereich der Siegelnähte die einander zugewandten Zonen der Mehrschichtfolie mit je einer Schicht aus Kaltsiegelmasse versehen sind, die entsprechend der durch die Art der Packung vorgegebenen geometrischen Form aufgebracht ist.

Die Erfindung zeichnet sich durch nachstehende Vorteile aus :

1. Wegfall der bisher üblichen Kombination von Innenfolie und Außenfolie, dadurch Verbilligung der Verpackung,

2. höhere Abpackleistung, ohne daß ein höherer Aufwand für die Verpackungsmaschinen notwendig wird,

3. die Verpackungsmaschinen können preiswerter ausgeführt werden, weil der bei Heißversiegelung erforderliche hohe Aufwand für die genaue Einregelung der Versiegelungstemperatur nun nicht mehr notwendig ist,

4. die für die Verpackung aufzuwendende Energie wird verringert, weil diese Folie eine Kaltversiegelung ermöglicht, also die für Heißversiegelung aufzuwendende elektrische Energie entfällt.

Im nachstehenden wird die Erfindung anhand der Ausführungsbeispiele darstellenden Figuren beschrieben. In den zum Teil schematisch vereinfacht gezeichneten Figuren sind einander entsprechende Teile mit den gleichen Bezugszeichen versehen.

Es zeigt :

Figur 1 eine fertige Verpackung für Kaffee in isometrischer Darstellung,

Figur 2 eine zur Herstellung dieser Verpackung dienende Folie,

Figur 3 einen Querschnitt entlang der Linien A-B durch die in Figur 2 dargestellte Mehrschichtfolie,

Figur 4 einen Querschnitt entlang der Linien A-B durch eine Variante der in Figur 2 dargestellten Mehrschichtfolie,

Figur 5 einen Querschnitt entlang der Linien A-B durch eine weitere Variante der in Figur 2 dargestellten Mehrschichtfolie.

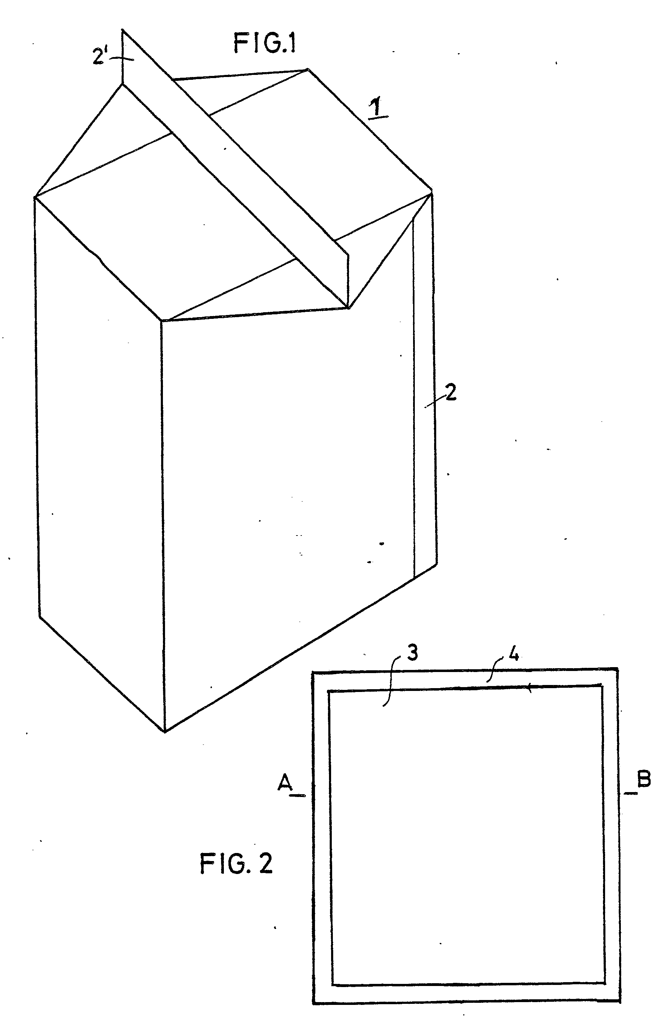

Die in Figur 1 dargestellte Verpackung 1 für Kaffee besteht aus einer gasdichten Trägerfolie, die entlang einer Längsseite durch eine Siegelnaht 2 und oben und unten durch je eine Siegelnaht 2' verschlossen ist. Die obere Siegelnaht 2' ist in dem Zustand unmittelbar nach Herstellung der Versiegelung dargestellt. Die nach oben gerichtete Siegelnaht 2' sowie die an deren Endzonen seitlich anschließenden Teile der Trägerfolie werden in der zum Herstellen der Verpackung dienenden Verpackungsmaschine umgeklappt und an den quaderförmigen Teil der Verpackung angedrückt, so daß sie eng an diesen anliegen ; dies ist am unteren Ende der Verpackung bereits der Fall, so daß die untere Siegelnaht 2' in der Figur nicht sichtbar ist.

Figur 2 zeigt die zur Herstellung der in Figur 1 dargestellten Verpackung dienende Mehrschichtfolie in ausgebreitetem Zustand. Die Trägerfolie 3 ist dort, wo die Siegelnähte hergestellt werden sollen, mit je einer profilierten Schicht aus Kaltsiegelmasse 4 bedeckt.

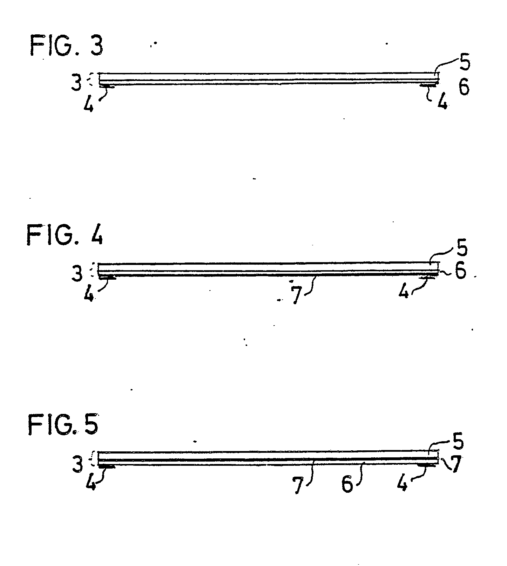

In Figur 3 ist ein Querschnitt durch eine derartige Mehrschichtfolie dargestellt. Die Trägerfolie 3 ist als Verbundfolie ausgebildet und besteht auf der Außenseite aus einer 80 bis 140 μm starken Papierschicht 5 aus sogenanntem gestrichenem Natronpapier und auf der Innenseite aus einer 12 bis 20 μm starken Schicht aus biaxial orientiertem Kunststoff, welche auf der von der Papierschicht abgewendeten Seite eine profilierte Schicht aus Kaltsiegelmasse 4 trägt.

Figur 4 zeigt den Querschnitt durch eine Variante der vorstehend im Zusammenhang mit Figur 3 beschriebenen Mehrschichtfolie. Diese hat von außen nach innen folgenden Aufbau :

eine Papierschicht 5 von 80 μm bis 140 μm Stärke, eine Kunststoffschicht 6 aus orientiertem Polypropylen (OPP) von 12 μm bis 20 μm Stärke, eine Aluminiumfolie 7 von 6 μm bis 12 μm Stärke.

Figur 5 zeigt den Querschnitt durch eine weitere Variante der vorstehend im Zusammenhang mit Figur 3 beschriebenen Mehrschichtfolie. Diese hat von außen nach innen folgenden Aufbau :

eine Papierschicht 5 von 80 μm bis 140 μm Stärke, eine Aluminiumfolie 7 von 6 μm bis 12 μm Stärke, eine Kunststoffschicht 6 aus orientiertem Polypropylen (OPP) von 12 μm bis 20 μm Stärke.

Für manche Anwendungszwecke hat es sich als günstig erwiesen, wenn die Trägerfolie 3 als Verbundfolie ausgebildet ist und von außen nach innen folgenden Aufbau hat :

eine Papierschicht 5 von 80 μm bis 140 μm Stärke, eine Kunststoffschicht aus Polyvinylidenchlorid (PVdC) von 3 μm bis 30 μm Stärke und eine Kunststoffschicht aus Polyäthylen (PE) von 20 μm bis 100 μm Stärke.

Ferner ist es für manche andere Zwecke günstig, wenn die Trägerfolie 3 als Verbundfolie ausgebildet ist und von außen nach innen folgenden Aufbau hat :

eine Papierschicht 5 von 80 μm bis 140 μm Stärke, eine Kunststoffschicht aus Polyäthylen (PE) von 20 μm bis 100 μm Stärke, eine Kunststoffschicht aus Polyvinylidenchlorid (PVdC) von 3 μm bis 30 μm Stärke.

Ein besonderer Vorteil der erfindungsgemäß ausgeführten Verpackung ist darin zu sehen, daß durch die Anordnung einer Kaltsiegelmasse im Bereich der Siegelnähte die Möglichkeit gegeben ist, eine im Bereich einer Siegelnaht bereits geöffnete Vakuumpackung nach dem Entnehmen eines Teiles des Verpackungsinhaltes in einfacher Weise durch Daumendruck wieder zu verschließen. Hierdurch wird bei stark aromatischen Gütern, wie z. B. Kaffee, ein Aromaverlust bei einer bereits angebrochenen Packung weitgehend vermindert.

Hierbei wird jedoch die ursprüngliche Dichtigkeit nicht wieder erreicht, und es bleibt dadurch erkennbar, daß die Packung bereits geöffnet wurde.

## Ansprüche

1. Vakuumpackung für Lebensmittel, insbesondere für Kaffee, die durch Versiegeln einer eine gasdichte Trägerfolie (3) aufweisende Mehrschichtfolie hergestellt ist, dadurch gekennzeichnet, daß im Bereich der Siegelnähte (2) die einander zugewandten Zonen der Mehrschichtfolie mit je einer Schicht aus Kaltsiegelmasse (4) versehen sind, die entsprechend der durch die Art der Packung vorgegebenen geometrischen Form aufgebracht ist.

2. Vakuumpackung nach Anspruch 1, dadurch gekennzeichnet, daß die Mehrschichtfolie auf der Außenseite aus einer 80 μm bis 140 μm starken Papierschicht (5), vorzugsweise aus sogenanntem gestrichenem Natronpapier, und auf der Innenseite aus einer damit kaschierten, 12 μm bis 20 μm starken Kunststoffolie (6) besteht, aus vorzugsweise biaxial orientiertem Kunststoff, auf welcher an der von der Papierschicht (5) abgewendeten Seite die Schicht aus Kaltsiegelmasse angeordnet ist (Figur 3).

3. Vakuumpackung nach Anspruch 1, dadurch gekennzeichnet, daß die Schicht aus Kaltsiegelmasse (4) als rechteckförmiger Rahmen angeordnet ist.

4. Vakuumpackung nach Anspruch 2, dadurch gekennzeichnet, daß die Mehrschichtfolie auf der Innenseite eine metallisierte Kunststoffschicht (6) von 12 μm bis 15 μm Stärke aus orientiertem Polyamid (OPA) aufweist.

5. Vakuumpackung nach Anspruch 2, dadurch gekennzeichnet, daß die Mehrschichtfolie (3) auf der Innenseite eine 12 μm bis 15 μm starke metallisierte Schicht aus Polyester (PETP-M) aufweist.

6. Vakuumpackung nach Anspruch 2, dadurch gekennzeichnet, daß die Mehrschichtfolie (3) auf der Innenseite eine 12 μm bis 20 μm starke Schicht aus biaxial orientiertem Polypropylen (OPP) aufweist.

7. Vakuumpackung nach Anspruch 2, dadurch gekennzeichnet, daß die Mehrschichtfolie auf der Innenseite eine mit Aluminiumfolie (7) kaschierte Kunststoffolie (6) aufweist.

8. Vakuumpackung nach Anspruch 7, dadurch gekennzeichnet, daß die Mehrschichtfolie (3) von außen nach innen folgenden Aufbau hat : eine Papierschicht (5) von 80 μm bis 140 μm Stärke, eine Kunststoffschicht (6) aus orientiertem Polypropylen (OPP) von 12 μm bis 20 μm Stärke, eine Aluminiumfolie (7) von 6 μm bis 12 μm Stärke (Fig. 4).

9. Vakuumpackung nach Anspruch 7, dadurch gekennzeichnet, daß sie nachstehenden, auf die Papierschicht (5) folgenden Aufbau hat : eine Kunststoffschicht aus Polyvinylidenchlorid (PVdC) von 3 μm bis 30 μm Stärke und eine Kunststoffschicht aus Polyäthylen (PE) von 20 μm bis 100 μm Stärke.

10. Vakuumpackung nach Anspruch 7, dadurch gekennzeichnet, daß sie nachstehenden, auf die Papierschicht (5) folgenden Aufbau von außen nach innen hat : eine Kunststoffschicht aus Polyäthylen (PE) von 20 μm bis 100 μm Stärke, eine Kunststoffschicht aus Polyvinylidenchlorid (PVdC) von 3 μm bis 30 μm Stärke.

## Claims

1. Vacuum pack for food, especially for coffee, produced by sealing a multilayer laminate featuring a gas-tight substrate (3), characterised in that in the region of the sealed seam (2) the zones of the multilayer laminate which face each other are provided with a layer of cold-sealing coating (4) which is applied as required by the shape of the pack.

2. Vacuum pack according to claim 1, characterised in that the multilayer laminate consists on its outside of a paper web (5) of 80 μm to 140 μm thickness, preferably of machine-coated kraft sulfate paper, and on its inside of a plastic film (6) of 12 μm to 20 μm thickness being preferably biaxially oriented plastic film with the cold-seal coating located on the side of the laminate being opposite to the paper web (5) (Fig. 3).

3. Vacuum pack according to claim 1, characterised in that the layer of cold-seal coating (4) is arranged as rectangular frame.

4. Vacuum pack according to claim 2, characterised in that the multilayer laminate has on its inside a metallised plastic film (6) of 12 μm to 15 μm thickness of oriented polyamide (OPA).

5. Vacuum pack according to claim 2, characterised in that the multilayer laminate (3) has on its inside a metallised plastic film of 12 μm to 15 μm thickness of polyester (PETP-M).

6. Vacuum pack according to claim 2, characterised in that the multilayer laminate (3) has on its inside a plastic film of biaxially oriented polypropylene (OPP).

7. Vacuum pack according to claim 2, characterised in that the multilayer laminate has on its inside a plastic film laminated to aluminium foil (7).

8. Vacuum pack according to claim 7, characterised in that the multilayer laminate (3) has the following structure starting from the outside : a paper web (5) of 80 μm to 140 μm thickness, a pastic film (6) of oriented polypropylene (OPP) of 12 μm to 20 μm thickness, an aluminium foil (7) of 6 μm to 12 μm thickness (Figur 4).

9. Vacuum pack according to claim 7, characterised in that it has following on the paper web (5) the following structure : a plastic film of polyvinylidene chloride (PVdC) of 3 μm to 30 μm thickness and a plastic film of polyethylene (PE) of 10 μm to 100 μm thickness.

10. Vacuum pack according to claim 7, characterised in that it has following on the paper web (5) the following structure starting from the outside : a plastic film of polyethylene (PE) of 20 μm to 100 μm thickness, a plastic film of polyvinylidene chloride (PVdC) of 3 μm to 30 μm thickness.

**Revendications**

1. Emballage sous vide pour les produits alimentaires, en particulier pour le café, réalisé par soudage d'une feuille multicouche comprenant une feuille support (3) étanche aux gaz, caractérisé en ce que dans la zone des soudures (2) les parties de la feuille multicouche venant face à face sont couvertes chacune d'une couche d'un produit de scellement à froid (4), laquelle étant placée d'après le type de la forme géométrique de l'emballage considéré.

2. Emballage sous vide suivant revendication 1, caractérisé en ce que la feuille multicouche comprend sur sa face extérieure une couche de papier (5) de 80 à 140 μm d'épaisseur, de préférence en papier dit couché à la soude, et sur sa face intérieure une feuille contre-collée de matière plastique (6) de 12 à 20 μm d'épaisseur, de préférence en un polymère orienté biaxialement, une couche d'une matière de scellement à froid (4) étant déposée sur la face de la feuille de matière plastique du côté opposé à la couche de papier (5) (Figure 3).

3. Emballage sous vide suivant revendication 1, caractérisé en ce que la couche de matière de scellement à froid (4) est déposée sous forme d'un cadre rectangulaire.

4. Emballage sous vide suivant revendication 2, caractérisé en ce que la feuille multicouche comprend sur sa face intérieure une couche de matière plastique (6) métallisée de 12 à 15 μm d'épaisseur faite d'un polyamide orienté (OPA).

5. Emballage sous vide suivant revendication 2, caractérisé en ce que la feuille multicouche (3) comprend sur sa face intérieure une couche de 12 à 15 μm d'épaisseur d'un polyester métallisé (PETP-M).

6. Emballage sous vide suivant revendication 2, caractérisé en ce que la feuille multicouche (3) comprend sur sa face intérieure une couche de 12 à 20 μm d'épaisseur d'un polypropylène orienté biaxialement (OPP).

7. Emballage sous vide suivant revendication 2, caractérisé en ce que la feuille multicouche comprend sur sa face intérieure une feuille de matière plastique (6) contre-collée (stratifiée) d'une feuille d'aluminium (7).

8. Emballage sous vide suivant revendication 7, caractérisé en ce que la feuille multicouche (3) a la composition suivante dans le sens de l'extérieur vers l'intérieur : une couche de papier (5) de 80 à 140 μm d'épaisseur, une couche en matière plastique (6) de polypropylène orienté (OPP) de 12 à 20 μm d'épaisseur, une feuille d'aluminium (7) de 6 à 12 μm d'épaisseur (Figure 4).

9. Emballage sous vide suivant revendication 7, caractérisé en ce que l'emballage a, après la couche de papier (5), la composition suivante : une couche en matière plastique de chlorure de polyvinylidène (PVdC) de 3 à 30 μm d'épaisseur et une couche en matière plastique de polyéthylène (PE) de 20 à 100 μm d'épaisseur.

10. Emballage sous vide suivant revendication 7, caractérisé en ce que l'emballage a, après la couche de papier (5), la composition suivante dans le sens extérieur vers l'intérieur : une couche de matière plastique de polyéthylène (PE) de 20 à 100 μm d'épaisseur, une couche de matière plastique de chlorure de polyvinylidène (PVdC) de 3 à 30 μm d'épaisseur.

FIG.1

2'

1

2

3    4

A    B

FIG. 2

FIG. 3

FIG. 4

FIG. 5